# EUROPÄISCHE PATENTSCHRIFT

(11) **EP 2 386 015 B1**
(45) Veröffentlichungstag und Bekanntmachung des Hinweises auf die Patenterteilung: **24.07.2019**
(21) Anmeldenummer: 09749131.0
(22) Anmeldetag: 12.11.2009
(51) Int. Cl.: F01N 3/20

(54) **TANKGESTALTUNG**
TANK ARRANGEMENT
AGENCEMENT DE RÉSERVOIR

(30) Priorität: 09.01.2009 DE 102009000101
(43) Veröffentlichungstag der Anmeldung: 16.11.2011
(73) Patentinhaber: Robert Bosch GmbH, 70442 Stuttgart (DE)
(72) Erfinder: KRAUSE, Michael, 67705 Trippstadt (DE); HAEBERER, Rainer, 75015 Bretten (DE); HORN, Matthias, 71691 Freiberg (DE)
(86) Internationale Anmeldenummer: PCT/EP2009/065051
(87) Internationale Veröffentlichungsnummer: WO 2010/078989

(56) Entgegenhaltungen:
- EP-A1- 1 662 103
- WO-A1-2008/138757
- WO-A2-2007/031467
- DE-A1-102007 059 635

## Beschreibung

### Stand der Technik

DE 101 39 139 A1 bezieht sich auf ein Dosiersystem zur Dosierung eines Reduktionsmittels für eine Abgasnachbehandlung. Bei dem Reduktionsmittel handelt es sich insbesondere um Harnstoff bzw. einer Harnstoff-Wasserlösung. Diese dient zur Reduktion von in dem Abgas einer Brennkraftmaschine enthaltenen Stickoxiden. Die Vorrichtung umfasst eine Fördereinrichtung zur Beförderung des Reduktionsmittels von einem Vorratsbehälter zu einem das Abgas führenden Abgasrohr. Ferner umfasst die Vorrichtung eine Zumesseinrichtung zur dosierten Zufuhr des Reduktionsmittels in das Abgasrohr, wobei die Fördereinrichtung eine Pumpe und die Zumesseinrichtung ein Dosierventil mit einem Austrittselement enthält. Die Zumesseinrichtung ist derart ausgebildet, dass diese nahe oder am Abgasrohr befestigt werden kann, so dass das Austrittselement in das Abgasrohr hineinragt. Die Fördereinrichtung ist derart beschaffen, dass diese an oder im Vorratsbehälter für das Reduktionsmittel aufgenommen werden kann und die Fördereinrichtung und die Zumesseinrichtung voneinander getrennte, über eine Verbindungsleitung miteinander verbundene Module darstellen.

DE 10 2004 051 746 A1 bezieht sich auf Tankmodul für ein Reduktionsmittel und ein Dosiersystem. Gemäß dieser Lösung umfasst das Tankmodul wenigstens ein Tankmodulgehäuse. Innerhalb einer Tankkammer des Tankmodulgehäuses ist ein Dosiersystem zur Dosierung eines Reduktionsmittels in ein Abgassystem angeordnet.

DE 10 2006 027 487 A1 betrifft einen Fahrzeugtank für ein flüssiges Reduktionsmittel, insbesondere für eine Harnstofflösung. Der Fahrzeugtank für ein flüssiges, beispielsweise wässriges Reduktionsmittel, insbesondere für eine Harnstofflösung zur Reduktion von Stickoxiden im Abgas von Brennkraftmaschinen weist eine Behälterwand auf, die aus Kunststoffmaterial hergestellt ist.

WO 2008/138757 A1 bezieht sich auf eine Leitungsdurchführung durch einen Heiztopfdeckel eines Heiztopfs eines Reduktionsmitteltanks. Mindestens eine Leitung durchsetzt eine Öffnung des Heiztopfdeckels und ist mittels eines Dichtelementes abgedichtet. Das Dichtelement ist als elastischer Steckdichtstopfen ausgeführt, der in einer dem Heiztopfdeckel zugeordnete Aufnahme dichtend eingesteckt ist.

DE 10 2007 059 635 A1 bezieht sich auf ein Flanschmodul für einen Vorratstank für ein Reduktionsmittel sowie auf den Vorratstank für ein Reduktionsmittel. Der Vorratstank für ein Reduktionsmittel wird an einer Abgasnachbehandlungseinrichtung eines Verbrennungsmotors eingesetzt und umfasst einen Flanschdeckel. Der Vorratstank weist eine Befülleinrichtung mit zumindest einer Befüllöffnung und/oder eine Entleerungseinrichtung mit zumindest einer Entleerungsöffnung auf, wobei der Flanschdeckel in einem Wandungsbereich des Vorratstanks anordenbar ist oder angeordnet ist. Zumindest eine Befüllöffnung und/oder eine Entleerungsöffnung ist im Flanschdeckel angeordnet.

Um einen Einsatz eines Dosiersystems zur Eindosierung von Harnstoff bzw. einer wässrigen Harnstoffwasser-Lösung zur Reduktion von Stickoxiden im Abgas einer Verbrennungskraftmaschine zu erreichen, und dessen Funktionieren auch bei tiefen Temperaturen zu gewährleisten ist, ist das im Tank bevorratete Reduktionsmittel gegebenenfalls aufzutauen. Dazu ist der Tank zur Bevorratung des Reduktionsmittels in der Regel mit einer Heizung, insbesondere einer elektrisch betätigten Heizung ausgestattet. Des Weiteren beinhaltet der Vorratstank zur Aufnahme des Reduktionsmittels außerdem einen Level-, einen Füllstandssensor sowie einen Temperatursensor. Eine Be- und Entlüftung des Vorratstankes erfolgt über eine diesem zugeordnete Belüftung.

Die Tankblase des Vorratstankes weist in der Regel folgende Öffnungen auf:
- eine Öffnung zur Befüllung des Vorratstanks,
- eine Öffnung zur Montage des Heizungselementes und der Sensoren,
- ferner eine Öffnung für Zu- und Rücklauf des Fördermoduls,
- eine Be- und Entlüftungsöffnung des Tanks sowie
- eine Öffnung zur Entleerung des Vorratstanks.

Diese Öffnungen können an verschiedenen Stellen des Vorratstanks positioniert werden. Aus Gründen einer vereinfachten Montage wird das Modul "Heizungselement, Füllstandssensor, Temperatursensor" bodenseitig montiert bzw. von dort demontiert. Die Absaugleitung wird üblicherweise auch an der tiefsten Stelle des Tankes angebracht. Da das Eis um die am Boden positionierte Heizung zuerst auftaut, ist es sinnvoll, auch die Ent- und Belüftung des Tanks von der Bodenseite her vorzunehmen. In vorteilhafter Weise sind die Öffnungen zur Entleerung des Tanks an dessen tiefste Stelle zu legen. Aufgrund dieser Vielzahl von Gründen, werden die aufgezählten Öffnungen in der Regel an die Bodenseite des Tanks gelegt.

Dies hat jedoch den Nachteil, dass alle aufgezählten Öffnungen in der Tankblase unterhalb des Flüssigkeitsspiegels des Reduktionsmittels liegen. Da es sich bei dem eingesetzten Reduktionsmittel, insbesondere der Harnstoff-Wasser-Lösung um ein besonders kriechfähiges Medium handelt, treten an diesen Öffnungen verstärkt Undichtigkeiten auf. Dies gilt insbesondere für Kunststofftanks, die aufgrund äußerer Einflüsse, Beschleunigungen, Eisdruck und Temperaturbelastung in Gegensatz zu Edelstahltanks eine Instabilität aufweisen. Da sich einerseits die wässrige Harnstofflösung beim Kontakt mit Luft sofort in Kristalle umwandelt und andererseits zur starker Korrosion an elastomeren Kunststoffen und metallischen Werkstoffen führt, wird eine noch so kleine Undichtigkeit unwillkürlich zu einer Beanstandung führen.

### Darstellung der Erfindung

In Abkehr von den bisher praktizierten gängigen Lösungen gemäß des Standes der Technik, wird erfindungsgemäß vorgeschlagen, alle erforderlichen Öffnungen, die sich am Vorratstank befinden an dessen Oberseite anzubringen, dies bedeutet nicht von dem durch das bevorratete Reduktionsmittel gefluteten Bereich des Vorratstanks weist die Tankschale oder Tankblase keine Öffnung bzw. Unterbrechung auf. Auch sind keine Flansche oder Verbindungen von Anschlüssen im vom Reduktionsmittel gefluteten Bereich der Tankschale bzw. Tankblase vorgesehen, da insbesondere bei langen Schweißnähten infolge der auftretenden mechanischen Belastungen, Risse auftreten könnten. Der erfindungsgemäß vorgeschlagenen Lösung folgend sind die Montageöffnung für die innerhalb des Tanks angeordneten Komponenten, die für Zulauf und Rücklauf des Fördermoduls erforderlichen Öffnungen, die Befüllöffnung des Vorratstanks sowie die Öffnung bzw. Öffnungen für die Be- und Entlüftung des Vorratstanks allesamt auf der Tankoberseite vorgesehen, d.h. nicht in den vom Reduktionsmittel gefluteten Bereich. Somit ist eine unmittelbare Leckage an der Unterseite des Vorratstanks ausgeschlossen.

Die erfindungsgemäß vorgeschlagene Lösung ist insbesondere vorteilhaft bei großen Öffnungen und insbesondere sehr vorteilhaft bei aus Kunststoffmaterial gefertigten Vorratstanks. Eine sich beim Gefrieren des Reduktionsmittels entstehende Eisbildung beginnt in der Regel an Unregelmäßigkeiten an der Innenseite der Tankwand in dem Bereich des Vorratstanks, der mit dem Reduktionsmittel geflutet ist. Solche Unregelmäßigkeiten sind zum Beispiel Öffnungen, die aus Montagegründen an der Tankwand ausgebildet sind. Der erfindungsgemäß vorgeschlagenen Lösung folgend, ist die Tankblase, d.h. die Innenseite des Tanks im vom Reduktionsmittel gefluteten Bereich auf der Tankinnenseite ohne Unregelmäßigkeiten ausgebildet, insbesondere ohne Nähte und Schweißungen. Ein sehr glattes Design, welches möglichst wenige Unregelmäßigkeiten bildet, von dem sich aus eine Eisbildung erstrecken könnte, wird bevorzugt.

Erfindungsgemäß liegt die Belüftung des Vorratstanks in dessen oberen Bereich, d.h. in dem nicht von Reduktionsmittel benetzten Bereich des Vorratstanks.

Sämtliche Dichtstellen, zum Beispiel zur elektrischen Kontaktierung von Sensoren und gegebenenfalls eines im Innenraum des Tanks vorzusehenden Heizelementes sowie gegebenenfalls erforderliche hydraulische Leitungen befinden sich im oberen, nicht vom Reduktionsmittel gefluteten Deckenbereich des Vorratstanks und sind aus diesem Grunde ebenfalls nicht dem Reduktionsmittel direkt ausgesetzt.

Anbaukomponenten, so zum Beispiel eine elektrisch betriebene Förderpumpe und dergleichen, befinden sich Erfindungsgemäß oben auf der Außenseite der Tankdecke und sind dort aufgeschweißt bzw. verlegt, so dass ein gegebenenfalls eine erforderliche Schweißung außerhalb des vom Reduktionsmittel gefluteten Bereichs der Tankschale liegt.

Es wird insbesondere keine Entnahmeöffnung an der tiefsten Stelle des Vorratstanks, so zum Beispiel zum Ablassen des Reduktionsmittels vorgesehen, sondern die Entleerung des Vorratstanks erfolgt durch Absaugen von der Oberseite her.

Das Fördermodul, so zum Beispiel die vorstehend erwähnte elektrische betriebene Pumpe stellt ebenfalls eine Wärmequelle dar und kann direkt auf der Tankdecke, über den Öffnungen positioniert werden, so dass sich eine günstige Anordnung hinsichtlich der erforderlichen Abdichtung und des Wärmeflusses beim Auftauen ergibt.

Eine deckenseitig vorgesehene Tanköffnung wird über Kunststoffdeckel mit Gewinde am Tank und einer aus Kunststoffmaterial gefertigten Verschlussmutter verschlossen. Die Dichtheit wird durch den Einsatz von Gummidichtungen gewährleistet.

### Kurze Beschreibung der Zeichnungen

Anhand der Zeichnung wird die Erfindung nachstehend eingehender beschrieben.

Es zeigt:
- Figur 1: die in schematischer Wiedergabe die Komponenten eines Dosiersystems zum Einbringen eines Reduktionsmittels in den Abgastrakt einer Brennkraftmaschine,
- Figur 2: ein Vorratstank zur Bevorratung des Reduktionsmittels mit an der Unterseite vorgesehenen Öffnungen und
- Figur 3: eine Ausführungsmöglichkeit der erfindungsgemäß vorgeschlagenen Lösung, bei der alle erforderlichen Öffnungen an die Oberseite des Vorratstankes, d.h. dem Fahrzeugboden zuweisend angeordnet sind.

### Ausführungsformen

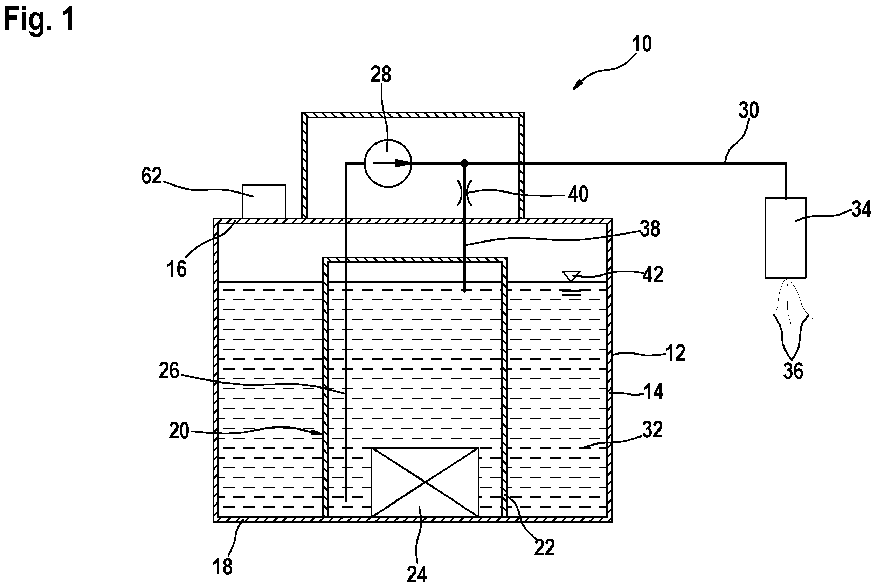

Aus der Darstellung gemäß Figur 1 gehen die Komponenten eines Dosiersystems zur Eindosierung eines Reduktionsmittels in den Abgastrakt einer Verbrennungskraftmaschine bzw. deren Anordnung im System hervor.

Figur 1 zeigt, dass ein Dosiersystem 10 einen Vorratstank 12 umfasst, der durch Tankwände 14, eine Tankdecke 16 und einen Tankboden 18 begrenzt ist. Im Inneren des Vorratstanks 12 ist ein Schwapptopf 20 angeordnet, der eine Topfwand 22 umfasst, die auf der Innenseite des Tankbodens 18 des Vorratstanks 12 aufsteht. Innerhalb des Schwapptopfs 20, oberhalb des Tankbodens 18 ist ein Heizungselement 24 angeordnet, bei dem es sich um eine elektrisch betätigbare Heizung handelt.

In den Schwapptopf 20 im Inneren des Vorratstanks 12 erstreckt sich eine Sauglanze 26. Über die Sauglanze 26 fördert ein in der Regel als elektromotorisch betriebene Pumpe ausgebildetes Förderaggregat 28 Reduktionsmittel 32 aus dem Inneren des Vorratstanks 12 in eine Leitung 30, die sich druckseitig des Förderaggregates 28 zu einem Dosiermodul 34 erstreckt, bei dem es sich in der Regel um ein an die Eigenschaften des Reduktionsmittels angepasstes Einspritzventil handelt. Über das Dosiermodul 34 wird das Reduktionsmittel 32 in Form von Strahlen 36 in den in Figur 1 nicht näher dargestellten Abgastrakt der Verbrennungskraftmaschine eingegeben.

Der Darstellung gemäß Figur 1 ist des Weiteren zu entnehmen, dass in der Leitung 30, die sich von der Druckseite des Förderaggregates 28 zum Dosiermodul 34 erstreckt, ein Rücklauf 38 abzweigt, indem eine Drosselstelle 40 für die Druckregulierung angeordnet ist. Der Rücklauf 38 mündet innerhalb des Schwapptopfes 20 im Inneren des Vorratstanks 12. Mit Bezugszeichen 42 ist der Flüssigkeitspegel im Inneren des Vorratstanks 12 bezeichnet, d.h. der Bereich der Tankwände 14, der an dessen Innenseite vom Reduktionsmittel 32 benetzt ist. Der oberhalb des Flüssigkeitspegels 42 liegende Bereich des Tankinneren des Vorratstanks 12 ist hingegen nicht vom Reduktionsmittel 32 benetzt. Des Weiteren befindet sich an der Oberseite der Tankdecke 16 eine hier nur schematisch angedeutete Be-/Entlüftung 62.

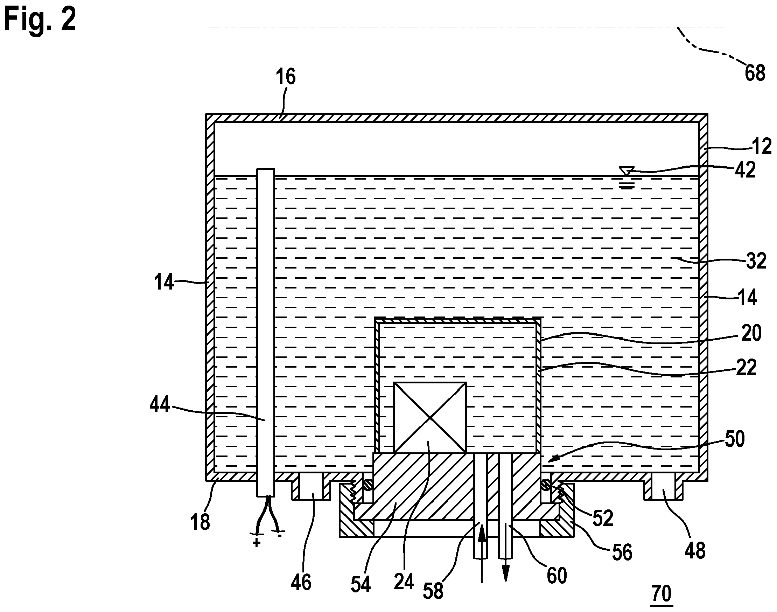

Figur 2 ist eine Ausführungsform eines aus dem Stande der Technik bekannten Tanks zu entnehmen.

Figur 2 zeigt, dass der Vorratstank 12 im Bereich des Tankbodens 18 eine Montageöffnung 50 für die innerhalb des Vorratstanks anzuordnenden Komponenten wie den Schwapptopf 20 sowie das Heizungselement 24. Die Montageöffnung 52 wird durch einen Flansch 54 verschlossen, der mittels einer Spannmutter 56 an der einer Straßenoberseite 70 zuweisenden Seite des Tankbodens 18 verschraubt wird. Der Flansch 54 ist über eine Dichtung 52 gegen die Umgebung abgedichtet. Der Flansch 54 verfügt über in der Darstellung gemäß Figur 2 über einen angedeuteten Rücklauf 58 sowie einen Zulauf 60 zu dem hier nicht dargestellten Förderaggregat 28 bzw. dem Düsenmodul 34 (vgl. Darstellung gemäß Figur 1).

Des Weiteren geht aus der Darstellung gemäß Figur 2 hervor, dass vom Tankboden 18 aus ein Füllstands- und Temperatursensor, der sich durch das Reduktionsmittel 32 bis zur Tankdecke 16 erstreckt. Mittels des Füllstands- bzw. Temperatursensors 44 werden sowohl der Füllstand, d.h. der Flüssigkeitspegel 42 im Inneren des Vorratstanks 12 als auch die Temperatur des in diesem bevorrateten Reduktionsmittels 32 erfasst und in elektrische Signale umgewandelt und weiterverarbeitet.

Des Weiteren befinden sich im Tankboden 18 auf der einer Straße 70 zuweisenden Seite des Vorratstanks 12 eine Befüllungsöffnung 46 sowie eine Entleerungsöffnung 48. Ein Zulauf 60 und ein Rücklauf 58 erstrecken sich durch Durchführungen im Flansch 54, der seinerseits über die Dichtung 52 gegen die Montageöffnung 50 im Tankboden 18 abgedichtet ist. Trotz der Dichtung 52 und trotz der Spannmutter 56, die mit einem vordefinierten Drehmoment angezogen wird, kommt es im Bereich des Tankbodens 18 auf der Straße 70 zuweisenden Seiten zu Undichtigkeiten.

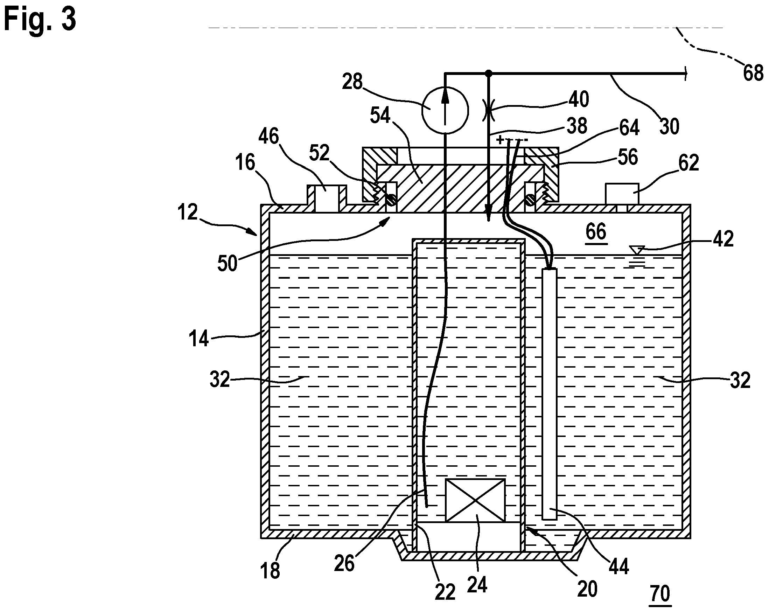

Der Darstellung gemäß Figur 3 ist ein Ausführungsbeispiel der erfindungsgemäß vorgeschlagenen Lösung zu entnehmen, bei der sämtliche Öffnungen bzw. Durchführungen für Zulauf, Rücklauf, elektrische Kontaktierung und dergleichen allesamt im nicht vom Reduktionsmittel 32 gefluteten Bereich des Vorratstanks 12 vorgesehen sind. In diesem befindet sich ein Luftraum 66, der sich zwischen der Unterseite der Tankdecke 16 sowie dem Flüssigkeitspegel 42 erstreckt.

Aus der Darstellung gemäß Figur 3 geht hervor, dass über die Montageöffnung 50, die in der Tankdecke 16 ausgebildet ist, sowohl das Heizelement 24 als auch der Schwapptopf 20 in das Innere des Vorratstanks 12 eingebaut werden können. Bevorzugt steht der Schwapptopf 20 mit seiner unteren Stirnseite in einer seinem Durchmesser entsprechenden Vertiefung des Tankbodens 18 auf, was dessen Lage stabilisiert und was dazu beiträgt, die Schwappbewegungen des Reduktionsmittels 32 im Vorratstank 12 zu dämpfen. In das Innere des Schwapptopfes 20, der von der Topfwand 22 begrenz ist, erstreckt sich die Sauglanze 26, über die ein bevorzugt als elektrische Pumpe ausgebildetes Förderaggregat 28 Reduktionsmittel 32 in die Leitung 30 fördert, die mit einem in der Darstellung gemäß Figur 3 nicht dargestellten Dosiermodul 34 in Verbindung steht.

Der erfindungsgemäß vorgeschlagenen Lösung gemäß Figur 3 folgend, ist der Tankboden 18 ein Bauteil und weist keinerlei Öffnungen auf, die der Straße 70 gegenüberliegen. Stattdessen sind sämtliche Öffnungen in den nicht vom Reduktionsmittel 32 gefluteten Teil des Vorratstanks 12 verlegt. Der Vorratstank 12 wird bevorzugt als Kunststoffbauteil durch Kunststoffblasverfahren hergestellt, und ist demzufolge nahtfrei ausgebildet. Insbesondere verlaufen in dem vom Reduktionsmittel 32 gefluteten Bereich des Vorratstanks 12 keinerlei Nähte, an denen es aufgrund der mechanischen Beanspruchung unter Temperaturschwankungen zu einer Rissbildung kommen könnte.

Der erfindungsgemäß vorgeschlagenen Lösung folgend ist in die Tankdecke 16 des Vorratstanks 12 gemäß der Darstellung in Figur 3 die Befüllungsöffnung 46 integriert. Des Weiteren ist eine Öffnung für eine Be- und Entlüftung 62 auf der äußeren Seite der Tankdecke 16 vorgesehen. Durch diese erstreckt sich die Montageöffnung 50, die in der Darstellung gemäß Figur 3 durch den Flansch 54 verschlossen ist. Der Flansch 54 ist mittels einer als O-Ring ausgebildeten Dichtung 52 gegen die Umgebung abgedichtet und mittels der Spannmutter 56 am Rande der Montageöffnung 50 fixiert. Der Flansch 54 seinerseits umfasst eine Durchführung für die Sauglanze 26, die in dieser Ausführungsvariante den Zulauf 60 darstellt sowie eine Durchführung für einen Rücklauf 38, vgl. Position 60 in Figur 2. Des Weiteren ist der Flansch 54 mit einer Durchleitung für die elektrische Kontaktierung 64 versehen, über welches ein sich vertikaler Richtung erstreckender Füllstands- und Temperatursensor 44 elektrisch kontaktiert ist. Dieser erstreckt sich in seiner Längserstreckung parallel zur Topfwand 22 des Schwapptopfes 20, der sich im Wesentlichen im Zentrum des das Reduktionsmittel 32 bevorratenden Vorratstanks 12 befindet.

Aus der Darstellung gemäß Figur 3 geht hervor, dass die Tankdecke 16 bzw. Spannmutter 56 im Flansch 54 mit ihren Oberseiten jeweils dem Fahrzeugboden 68 zuweisen, während der Tankboden 18 - öffnungsfrei ausgebildet - der Straße 70 zuweist. Durch die erfindungsgemäß vorgeschlagene Lösung werden Lachen von Reduktionsmittel 32, die aufgrund von dessen Kriecheigenschaften aus den in Figur 2 dargestellten an der Unterseite des Vorratstanks ausgebildeten Öffnungen entweichen könnten, vermieden.

Die erfindungsgemäß vorgeschlagene Lösung kann in vorteilhafter Weise dort eingesetzt werden, bei der Tankblasen von Vorratstanks 12 große Öffnungen aufweisen und insbesondere bei aus Kunststoffmaterial gefertigten Tanks. Werden die Tankwände 14 aus metallischem Material gefertigt, werden stoffschlüssig verbundene Anschlüsse, die zum Beispiel im Wege des Schweißens hergestellt werden, möglichst in dem Bereich vermieden, der unterhalb des Flüssigkeitspegels 42 des Reduktionsmittels 32 im Tank verbleibt, d.h. im gefluteten Bereich desselben vermieden, da insbesondere bei langen Schweißnähten infolge der Belastungen Risse auftreten können.

## Patentansprüche

1. Vorratstank (12) eines Dosiersystems (10) zum Einbringen eines Reduktionsmittels (32) in einen Abgastrakt einer Brennkraftmaschine, wobei der Vorratstank (12) mindestens eine Öffnung (50) für Einbauten (20, 24) sowie Öffnungen (46, 48, 62) zum Befüllen und Entleeren und für eine Be-/Entlüftung (62) aufweist, wobei sämtliche Öffnungen (46, 48, 50, 62) oberhalb eines vom Reduktionsmittels (32) gefluteten Bereiches des Vorratstanks (12) angeordnet sind und eine Entleerungsöffnung (48) in der Tankdecke (16) des Vorratstanks liegt, und Anbaukomponenten (28) auf der Tankdecke (16) angeordnet sind, und deren Befestigung auf der Außenseite der Tankdecke (16) innerhalb des nicht vom Reduktionsmittel (32) gefluteten Bereiches des Vorratstanks (12) liegen, wobei die mindestens eine Öffnung (50) zur Montage eines Schwapptopfes (20) und/oder eines Heizelementes (24), Öffnungen für einen Zulauf (60), einen Rücklauf (38,58), Öffnungen (46, 48) zur Befüllung und Entleerung, mindestens eine Öffnung zur Be-/Entlüftung (62), eine Durchführung für elektrische Kontaktierungen (64) in der Tankdecke (16) oder einem Flansch ausgeführt sind, und außerhalb eines vom Reduktionsmittel gefluteten Bereiches (32) des Vorratstanks (12) liegen, wobei der Schwapptopf (20) eine Topfwand (22) umfaßt, die auf der Innenseite des Tankbodens (18) aufsteht.

2. Vorratstank (12) gemäß Anspruch 1, **dadurch gekennzeichnet, dass** die Öffnung (50) zur Montage von Einbauten (20, 24) durch den Flansch (54) verschlossen ist.

3. Vorratstank (12) gemäß Anspruch 1, **dadurch gekennzeichnet, dass** eine Tankblase bzw. Tankschale des Vorratstankes (12) aus Kunststoffmaterial gefertigt ist.

4. Vorratstank (12) gemäß Anspruch 1, **dadurch gekennzeichnet, dass** die Tankdecke (16) des Vorratstanks (12) dem Fahrzeugboden (68) zuweist.

5. Vorratstank (12) gemäß Anspruch 4, **dadurch gekennzeichnet, dass** dieser im vom Reduktionsmittel (32) gefluteten Teil nahtfrei und ohne Schweißungen ausgeführt ist.

6. Vorratstank (12) gemäß einem oder mehrerer der vorhergehenden Ansprüche, **dadurch gekennzeichnet, dass** Dichtstellen für elektrische Kontaktierungen (64) eines von Einbauten (20, 24), sowie hydraulische Leitungen im oberen Bereich des Vorratstanks (12), insbesondere in der Tankdecke (16) im nicht vom Reduktionsmittel (32) gefluteten Teil des Vorratstanks (12) angeordnet sind.

7. Vorratstank (12) gemäß einem oder mehrerer der vorhergehenden Ansprüche, **dadurch gekennzeichnet, dass** das Förderaggregat (28) zur Förderung des Reduktionsmittels (32) aus dem Inneren des Vorratstanks (12) auf der Tankdecke (16) oberhalb der Öffnungen (46, 48, 50, 62) positioniert ist.

8. Vorratstank (12) gemäß einem oder mehrerer der vorhergehenden Ansprüche, **dadurch gekennzeichnet, dass** an der Tankdecke (16) ausgebildete Öffnungen (46, 48, 50, 62) über Kunststoffdeckel verschlossen sind.

## Claims

1. Storage tank (12) of a metering system (10) for the introduction of a reducing agent (32) into an exhaust gas section of an internal combustion engine, the storage tank (12) having at least one opening (50) for internals (20, 24) and openings (46, 48, 62) for filling and emptying and for aerating/ventilating (62), all of the openings (46, 48, 50, 62) being arranged above a region of the storage tank (12) which is flooded by the reducing agent (32), and an emptying opening (48) lying in the tank roof (16) of the storage tank, and attachment components (28) being arranged on the tank roof (16), and the fasteners thereof lying on the outer side of the tank roof (16) within that region of the storage tank (12) which is not flooded by the reducing agent (32), the at least one opening (50) for mounting of a splash pot (20) and/or heating element (24), openings for an inlet (60), a return (38, 58), openings (46, 48) for filling and emptying, at least one opening for aerating/ventilating (62) and a leadthrough for electric contacts (64) being configured in the tank roof (16) or a flange, and lying outside a region (32) of the storage tank (12) which is flooded by the reducing agent, the splash pot (20) enclosing a pot wall (22) which stands up right on the inner side of the tank bottom (18).

2. Storage tank (12) according to Claim 1, **characterized in that** the opening (50) for mounting internals (20, 24) is closed by way of the flange (54).

3. Storage tank (12) according to Claim 1, **characterized in that** a tank bladder or tank shell of the storage tank (12) is manufactured from plastic material.

4. Storage tank (12) according to Claim 1, **characterized in that** the tank roof (16) of the storage tank (12) points towards the vehicle floor (68).

5. Storage tank (12) according to Claim 4, **characterized in that** it is configured without seams and without welds in the part which is flooded by the reducing agent (32).

6. Storage tank (12) according to one or more of the preceding claims, **characterized in that** sealing points for electric contacts (64) of one of the internals (20, 24), and hydraulic lines are arranged in the upper region of the storage tank (12), in particular in the tank roof (16) **in that** part of the storage tank (12) which is not flooded by the reducing agent (32).

7. Storage tank (12) according to one or more of the preceding claims, **characterized in that** the delivery assembly (28) for delivering the reducing agent (32) out of the interior of the storage tank (12) is positioned on the tank roof (16) above the openings (46, 48, 50, 62) .

8. Storage tank (12) according to one or more of the preceding claims, **characterized in that** openings (46, 48, 50, 62) which are configured on the tank roof (16) are closed by plastic covers.

## Revendications

1. Réservoir (12) pour système de dosage (10) servant à injecter un agent de réduction (32) dans le conduit de gaz d'échappement d'un moteur à combustion interne, le réservoir (12) présentant au moins une ouverture (50) pour ganitures (20, 24) ainsi que des ouvertures (46, 48, 62) de remplissage et de vidange ainsi que pour un apport et/ou une évacuation (62) d'air, toutes les ouvertures (46, 48, 50, 62) étant disposées au-dessus d'une partie du réservoir (12) balayée par l'agent de réduction (32) et une ouverture de vidange (48) étant située dans le couvercle (16) du réservoir, et des composants auxiliaires (28) étant disposés sur le côté extérieur du couvercle (16) du réservoir, leur fixation sur le côté extérieur du couvercle (16) du réservoir étant située à l'intérieur de la partie du réservoir (12) non balayée par l'agent de réduction (32), la ou les ouvertures (50) étant destinées au montage d'un pot (20) de collecte des débordements et/ou d'un élément chauffant (24), des ouvertures à un apport (60), à un retour (38, 58), des ouvertures (46, 48) au remplissage et à la vidange, au moins une ouverture (62) à un apport et/ou une évacuation d'air, un passage (64) à des contacts électriques dans le couvercle (16) du réservoir ou dans une bride, ces ouvertures étant situées à l'extérieur d'une partie (32) du réservoir (12) non balayée par l'agent de réduction, le pot (20) de collecte des débordements comportant une paroi (22) posée sur le côté intérieur du fond (18) du réservoir.

2. Réservoir (12) selon la revendication 1, **caractérisé en ce que** l'ouverture (50) de montage d'accesoires (20, 24) est fermée par la bride (54).

3. Réservoir (12) selon la revendication 1, **caractérisé en ce qu'**une bulle ou une coquille du réservoir (12) sont réalisées en matière synthétique.

4. Réservoir (12) selon la revendication 1, **caractérisé en ce que** le couvercle (16) du réservoir du réservoir (12) est tourné vers le fond (68) du véhicule.

5. Réservoir (12) selon la revendication 4, **caractérisé en ce qu'**il est réalisé sans soudure dans la partie balayée par l'agent de réduction (32).

6. Réservoir (12) selon une ou plusieurs des revendications précédentes, **caractérisé en ce que** des emplacements étanches pour des contacts électriques (64) de l'une des garnitures (20, 24) ainsi que des conduits de liquide sont disposés dans la partie supérieure du réservoir (12) et en particulier dans le couvercle (16) du réservoir, dans la partie du réservoir (12) non balayée par l'agent de réduction (32).

7. Réservoir (12) selon une ou plusieurs des revendications précédentes, **caractérisé en ce que** l'ensemble de pompe (28) qui transporte l'agent de réduction (32) hors du réservoir (12) est positionné sur le couvercle (16) du réservoir au-dessus des ouvertures (46, 48, 50, 62).

8. Réservoir (12) selon une ou plusieurs des revendications précédentes, **caractérisé en ce que** les ouvertures (46, 48, 50, 62) ménagées dans le couvercle (16) du réservoir sont fermées par des capuchons en matière synthétique.
